Europäisches Patentamt

European Patent Office

Office européen des brevets

(19)

(11) EP 1 033 567 A1

(12) **EUROPEAN PATENT APPLICATION**

(43) Date of publication:
06.09.2000 Bulletin 2000/36

(51) Int Cl.$^7$: **G01N 21/64**

(21) Application number: **99104273.0**

(22) Date of filing: **03.03.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Evotec Analytical Systems GmbH 40699 Erkrath (DE)**

(72) Inventor: **Meyer-Almes, Dr. Franz-Josef 58636 Iserlohn (DE)**

(74) Representative:
**Meyers, Hans-Wilhelm, Dr.Dipl.-Chem. et al Patentanwälte von Kreisler-Selting-Werner Postfach 10 22 41 50462 Köln (DE)**

(54) **Homogeneous fluorescence assay**

(57) The present invention discloses a homogeneous fluorescent binding assay method using carrier particles. Complexes between said carrier particles and components to be examined should be freely diffusing in solution. It is preferred that said carrier particles are substantially monodisperse and have a diameter d ≤ approximately 1 μm.

Figur 1a

## Description

Fluorescence Correlation Spectroscopy (FCS) and related fluorescence technologies have been developed into versatile, specific and sensitive methods applicable to the life sciences. DNA-DNA, protein-DNA, ligand-receptor, dye-DNA, and protein-protein interactions, among others, have been successfully analysed using FCS. Recently, special applications of FCS in the field of high throughput pharmaceutical screening have been described (Auer M. et al., *Drug Discovery Today,* **3**, 457 -465, October 1998).

In order to obtain a rapid and precise measurement of the interaction between two molecules using FCS, there must be a substantial difference between the translational diffusion constant of a free molecule and that of the same molecule when it is part of a molecular complex. To achieve this change, typical FCS assays require that the smaller of the two interacting molecules be tagged with a fluorescent dye. If only the larger binding partner can be labeled with a fluorophore, the binding event can not be measured using FCS since the resulting change in translational diffusion upon complex formation will not be sufficient to be detected.

To overcome this difficulty, US patent 4,421,860 discloses the use of carrier particles in a homogeneous fluoro-immunoassay involving auto-correlation processing of optically sensed signals. This technique includes the use of carrier particles with at least one active component coated on these particles, and the exposure of the particles to at least two additional active components in solution. Emphasis is put on the fact that said carrier particles must be relatively large. The only example describes the use of inert particles having a diameter of $4.3\,\mu m$. The carrier particles may also be biological cells such as blood cells with an active component on their surface. These cells have an even higher diameter than the disclosed artificial carrier particles, ranging from nearly $10\,\mu m$ of a human erythrocyte up to about $200\,\mu m$ of a human oocyte. One major draw-back of this method is that the sample cell has to be rapidly moved to prevent sedimentation of the particles. Fluid velocity currents - which are a result of the acceleration of the motion of the sample cell - limit the fluctuation lifetime of any kind of species present in the sample. As a direct consequence, FCS sampling times are restricted to a few seconds.

Accordingly, a principal object of the present invention is to provide an assay or analysis method which overcomes these requirements.

In accordance with one specific aspect of the invention, a homogeneous fluorescent binding assay method includes the use of carrier particles with at least one binding site on each of said carrier particles, and the exposure of the particles to at least two additional components in solution. With one of the components being fluorescently tagged, there is a shifting of some of the tagged components from solution where they are free, into a state where they are bound to the carrier particles. Subsequently, the solution is subjected to illumination which causes the fluorescently tagged material to emit radiation, and optical and electronic techniques are employed to determine the number or fraction of the fluorescently tagged components which are bound to the carrier particles, or which are "free" in solution. It is an essential feature of the present invention that the complexes of fluorescently tagged components bound to carrier particles freely diffuse within the solution.

The invention therefore involves the use of carrier particles having a diameter d which is smaller than or equal to approximately 1 μm. It is preferred that said carrier particles have a diameter d in the range of $1\,\mathrm{nm} \leq d \leq 1\,\mu m$, in particular $10\,\mathrm{nm} \leq d \leq 500\,\mathrm{nm}$, more particularly $50\,\mathrm{nm} \leq d \leq 300\,\mathrm{nm}$.

Preferably, said carrier particles are substantially monodisperse. It is particularly preferred that said carrier particles are highly uniform, having a coefficient of variation (CV) of diameter which is $\leq 20\,\%$, preferably $\leq 10\,\%$, more preferably $\leq 5\,\%$. It is preferred to use highly uniform particles if a specific physical property of the complex between fluorescently tagged component and carrier particle is determined, said specific physical property relating to the shape and size of said complex. In order to separate the specific brightness distributions of complexed and unbound component, highly uniform carrier particles are also a valuable tool.

In a further preferred embodiment, said carrier particles comprise metal oxides, metal hydroxides, silicates, metal colloids, silver halogenites, arsenic sulfide, nickel sulfide, cobalt sulfide, carbon colloids, and/or organic polymers. It is particularly preferred to use dendrimer-based substances, such as dendrimer polyethylenglycol. These substances are commercially available (e.g. Star PEG, Shearwater Polymers Inc.)

In a further embodiment said carrier particles exhibit only such a limited amount of binding sites that no quenching effects between neighboured fluorophores occurs. It is preferred to have a surface area per bound component $\geq 10^5\,\mathrm{A}^2$, preferably $\geq 10^6\,\mathrm{A}^2$.

Illuminating the solution is preferably performed on basis of a confocal optical set-up and/or multi-photon excitation and/or a near-field optical set-up. The confocal technique is based on using a point source of light sharply focussed to a diffraction-limited spot on the sample. The emitted light is viewed through a spatial filter (pinhole) that isolates the viewing area to that exactly coincident with the illuminating spot. Thus, the illumination and detection apertures are optically conjugated with each other. Light originating from focal planes other than that of the objective lens is rejected, which effectively provides a very small depth of field. It is preferred to use a microscope objective with a high numerical aperture, preferably $\geq 0.9$, and/or a small working distance, preferably $\leq 1\,\mathrm{mm}$. It is also possible to use a fibre-optical set-up which is inexpensive and easy to construct and to interface to existing optical instruments. Fibres are used for both the illuminating and the sensing pathways of the optical instrument. The finite diameter of the fibre optic serves as the effective confocal pinhole. Within multiple-photon excitation, long wavelength light pulses providing sufficient instantaneous intensity to produce in a sample simultaneous absorption of two or more incident photons are focussed at an object plane. It might be preferred to use light sources producing subpicosecond pulses of sufficient instantaneous intensity and repetition rate. Because of the high instantaneous power provided by the very short duration intense pulses focussed to the diffraction limit, there is an appreciable probability that a fluorophore, contained in the sample, and normally excitable by a single high energy photon having a short wavelength will absorb two or more long wavelength photons from the laser source simultaneously. This absorption combines the energy of the photons in the fluorophore molecule, thereby raising the fluorophore to its excited state. When the fluorophore returns to its normal state, it emits light, and this light then passes back through the microscope optics to a suitable detector. Multiple photon excitation provides improved background discrimination and reduces photobleaching of the fluorophores. Within a near-field optical set-up, an aperture having a diameter that is smaller than an incident optical wavelength is used. In one scheme, a sample is illuminated by an external source. A portion of the light emitted by the sample is collected by the aperture and relayed to a photo-detector by, for example, an optical fibre. In an alternate scheme, light is relayed by an optical fibre, which itself functions as miniscule light source for illumination of the sample.

In one embodiment of the present invention, optically sensing output signals is performed by measuring in a repetitive mode a number of photon counts per time interval of defined length. Electronically processing the optically sensed output signals comprises the steps of determining a distribution function of the number of photon counts per said time interval and thereafter determining a distribution function of specific brightness of said carrier particles and/or said fluorescently tagged components on basis of said function of the number of photon counts. The specific brightness in the sense of the present invention is a physical characteristic which expresses in what extent a molecule is able to emit radiation. It is thought to characterise single molecules or complexes and therefore the value of specific brightness is neither depending on concentration of said molecules or complexes, nor on the presence of other molecules or complexes. Thus, a change of the total count rate of photons emitted from the measurement volume, if only due to a change in concentration of the total number of particles, does not influence the value of specific brightness. Specific brightness of a particle is usually expressed in terms of the mean count rate per particle which is a weighted average of the count rate over co-ordinates of the particle in the measurement volume. In some cases, one might prefer to express the specific brightness in count rates corresponding to a particle positioned in a place where the count rate has its top values. This could e.g. be the centre of the focus of the incident beam.

In a further embodiment of the present invention, optically sensing output signals is performed by measuring in a repetitive mode a length of time intervals between preferably consecutive photon counts. Electronically processing the optically sensed output signals comprises the steps of determining a distribution function of the length of said time intervals and thereafter determining a distribution function of specific brightness of said carrier particles and/or said fluorescently tagged components on basis of said function of the length of time intervals.

In both embodiments described above, it is particularly useful to perform the electronically processing by applying an inverse transformation with linear regularisation and/or constraints. For the method of inverse transformation see e.g. W. H. Press, S. A. Teukolsky, W. T. Vetterling, B. P. Flannery, Numerical recipes in C: the art of scientific computing, 2nd edition, Cambridge University Press, 1992, p. 808, which is hereby incorporated by reference.

In further preferred embodiments of the present invention, determining the amount of fluorescently tagged component which is free and/or that which is bound to the carrier is based on other specific physical properties than specific brightness. These are e.g. diffusion coefficient (to be preferably determined by FCS), absorption cross-section, quantum yield of fluorescence, anisotropy of fluorescence, fluorescence decay time, ratio of fluorescence intensity passing through different optical filters, etc.

Carrier particles bearing binding sites such as antibodies, protein A, or streptavidin, can be used to perform a variety of assays which capitalise on the advantages of using FCS to study biological interactions. Using this strategy it is possible to use FCS to evaluate the binding of a large fluorescent antibody to a much smaller antigen - thereby eliminating the requirement of conventional FCS that the smaller molecule bears the fluorescent tag, and capitalising on the broad availability of fluorescent antibodies. The assay principle according to the present invention allows for the design of FCS experiments without regard to the mass differences between antigen and antibody.

The carrier particles which are used in the present invention should preferably exhibit several features. They should behave as true diffusing molecules in order to satisfy the fit model which is used for evaluation. This condition is fulfilled if the diameter is in the nanometer range, preferably smaller than 300 nm. The carrier particles should be stable as colloids in solution and should show no tendency to aggregate. Furthermore, non-specific binding of molecules, in particular non-specific binding of the fluorescent ligand, to the particle surface should not occur.

Assays according to the present invention are characterised by the binding of e.g. many ligands to a particle which carries e.g. many receptor molecules. In the following section, the theoretical basis for the FCS analysis of such systems is described.

In case of a competition assay, the system of chemical reactions is described by

$$L + R \overset{K_1}{\Longleftrightarrow} RL$$

$$C + R \overset{K_2}{\Longleftrightarrow} RC$$

with C representing the non-fluorescent ligand which competes with the fluorescent ligand L for binding to the receptor R. RL and RC are the complexes of L and R, and C and R, respectively, with $K_1$ and $K_2$ being the corresponding dissociation constants which describe the binding affinity.

The concentrations of the molecular species involved in the chemical equilibrium can be calculated in accordance with the Feldman equations:

$$
\begin{aligned}
[L]_{eq} &= [L]_0 - [RL]_{eq} \\
[C]_{eq} &= [C]_0 - [RC]_{eq} \\
[RL]_{eq} &= \frac{[L]_{eq}[R]_0 K_1}{1 + K_1[L]_{eq} + K_2[C]_{eq}} \\
[RC]_{eq} &= \frac{[C]_{eq}[R]_0 K_2}{1 + K_1[L]_{eq} + K_2[C]_{eq}}
\end{aligned}
\tag{1}
$$

The equations can be solved numerically using such programs as Mathcad (Mathsoft), Mathematica or Scientist (MicroMath).

The probability p that a receptor molecule is occupied by ligand L is simply given by:

$$p = \frac{[RL]_{eq}}{[R]_0} \tag{2}$$

For particles carrying N receptor molecules, the probability that a particle binds n ligand molecules L is:

$$p(n) = \frac{N!(1-p)^{N-n}p^n}{(N-n)!n!} \tag{3}$$

Since p(n) is a binominal distribution, the mean number and the mean of the square of the number of ligands bound per particle are:

$$\bar{n} = \sum_n np(n) = pN \tag{4}$$

$$\overline{n^2} = \sum_n n^2 p(n) = Np(1-p+Np) \tag{5}$$

The auto-correlation amplitude $g_i$ of a diffusing species i is given by:

$$g_i = \frac{c_i q_i^2}{\left(\sum_i c_i q_i\right)^2} = \frac{c_i q_i^2}{I^2} \qquad (6)$$

$c_i$ and $q_i$ denote the concentration and the relative fluorescence intensity, respectively, detected per molecule of species i. For simplicity $q_L$ and $q_{RL}$ are chosen to be 1. Under these conditions, there is no change in fluorescence intensity per molecule when the ligand L binds to its receptor molecule, and the fluorescence intensity of a particle is proportional to the number of bound ligands. This applies for the majority of fluorescent dyes used for FCS.

The amplitude of the unbound ligand L is then simply:

$$g_L = \frac{[L]}{I^2} \qquad (7)$$

The amplitude of the ligands bound to particles $g_B$ can be calculated accordingly using equations 5 and 6:

$$g_B = \frac{1}{I^2} \sum_n [P]_0 \, p(n) n^2$$
$$= \frac{1}{I^2} [P]_0 \, Np(1 - p + Np) \qquad (8)$$

with $[P]_0$ being the concentration of carrier particles. The apparent degree of binding determined using FCS is defined as $Y = g_B / (g_L + g_B)$ and the mean number of particles per observation volume is defined as $1/(g_L + g_B)$. Consequently, $g_B$ can be deduced from a conventional FCS-experiment by dividing the calculated degree of binding Y by the corresponding mean number of particles within the focus.

Immuno assay protocols can be easily converted into soluble homogeneous assays according to the present invention. This is particularly useful, because a wealth of quantitative assays employed in diagnostics and pharma screening are immunoassays, e.g. RIA's, EIA's, ELISAs. The carrier particles can be versatily used as a solid phase which is soluble as a colloid. Therefore, carrier particles with dimensions smaller than 1 $\mu$m, preferably smaller than 300 nm, could be conveniently handled like a true solution. Since the assays according to the present invention are homogeneous assays, time consuming washing steps could be omitted and the overall assay time could be reduced from several hours to half an hour and less. FCS detection of the assay according to the present invention allows for miniaturisation which is in particular important for high throughput pharma screening in order to reduce reagent costs.

The conversion of heterogeneous immuno assays comprises only few steps involving synthesis of fluorescent antigenes/antibodies, immobilisation of antibody on the surface of nanoparticles and optimisation of concentration of involved antigenes, antibodies and carrier particles. In case of a competitive assay a fluorescent conjugate of an antigen has to be prepared. If a small antigen is to be conjugated to a fluorophore, the lack of a functional group for coupling or the drop in affinity of the specific antibody could cause problems. But in non isotopic immuno assays usually antigene conjugates with biotin or other probes, e.g. acridine ester, exist which could be used directly. In addition, for many small compounds - e.g. hormones like estradiol, testosterone, progesterone - derivates are available which contain functional groups for linking a fluorophore to them. In the case of estradiol the problem of antibody affinity has been investigated for six fluorescent conjugates. In fact five out of six conjugates could be bound and four conjugates could be shown to bind specifically to the anti-estradiol antibody. Protein antigenes can be labelled with fluorophors or biotin according to standard procedures. In particular the coupling of dyes to antibodies usually does not affect the affinity to their antigene and virtually all antibody and protein conjugates worked in the assays according to the present invention.

The capture antibody or antigene, if an antibody is to be detected, can easily be attached to the carrier particles e.g. by Biotin/Streptavidin, protein A, anti-species secondary antibody. The many existing building blocks of carrier particles and capture antibodies enhance the flexibility of assays according to the present invention.

Since the development of an assay according to the present invention involves always similar steps, the set up of such an assay can be done very efficiently according to standard procedures. Therefore, a major bottleneck in the pharma screening area - the duration to establish a screening assay - could be widened up significantly.

In conclusion, assays according to the present invention represent a new general assay method in the area of diagnostics and pharma screening. They feature maximal flexibility in assay design because of their quasi mass independence and the many available building blocks such e.g. antibodies, carrier particles, biotinylated antigenes. Existing heterogeneous immuno assays can be quickly transferred into homogeneous miniaturisable assays according to the present invention. The applicability of the assay principles according to the present invention is not restricted. to classical binding reactions but can be extended to enzyme reactions, provided educt and product could be discriminated using binding to e.g. an antibody. They have a similar performance as conventional immuno assays. The versatility of the assay principles according to the present invention opens new ways to improve the efficiency of drug development by shorten the time for screening assay set up.

Other objects, features and advantages will become apparent from a consideration of the following detailed description and from the accompanying drawings.

Fig. 1 a - e show different types of homogeneous fluorescent binding assay methods.

Fig. 2 a - c show simulated competition curves in respect to different parameters.

Fig. 3 shows a normalized autocorrelation curve relating to example 1.

Fig. 4 shows the results of a theophylline competition assay relating to the theophylline experiment described in example 1.

Fig. 5 shows the results of a competition experiment relating to example 2.

Fig. 6 shows the results of a human chorionic gonadotropin assay relating to example 3.

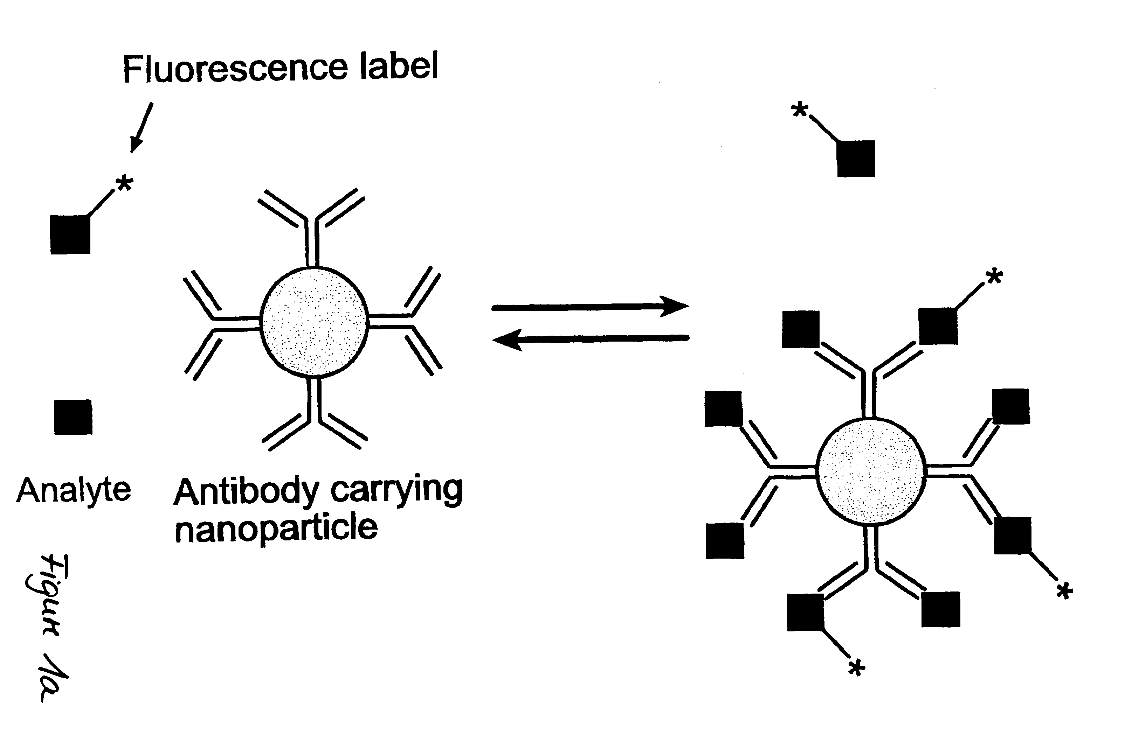

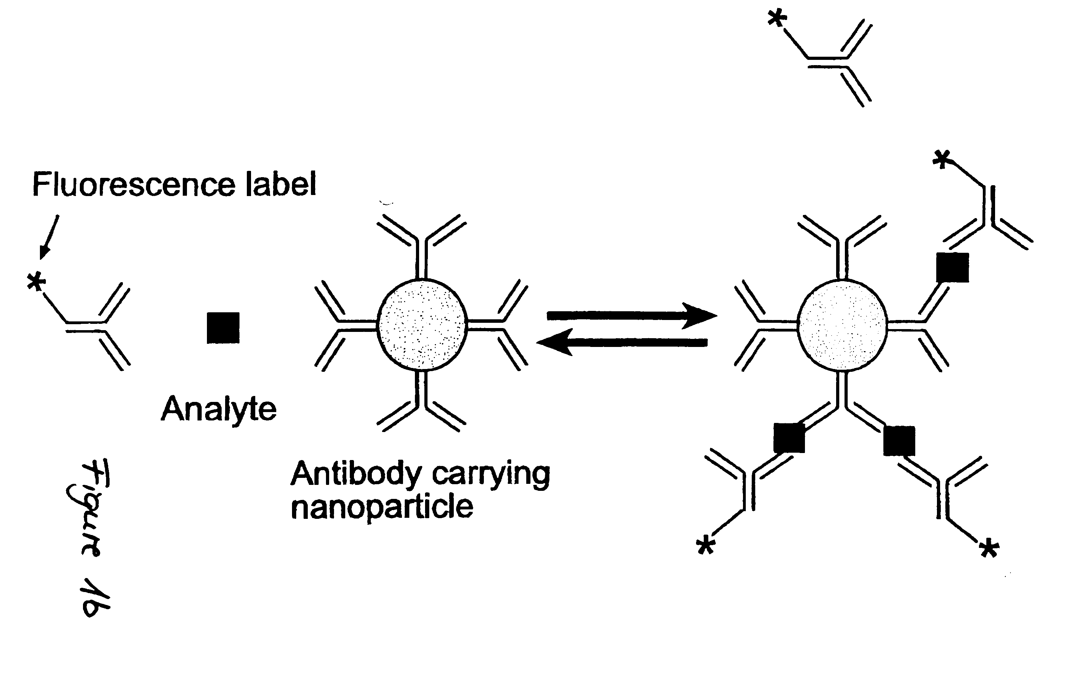

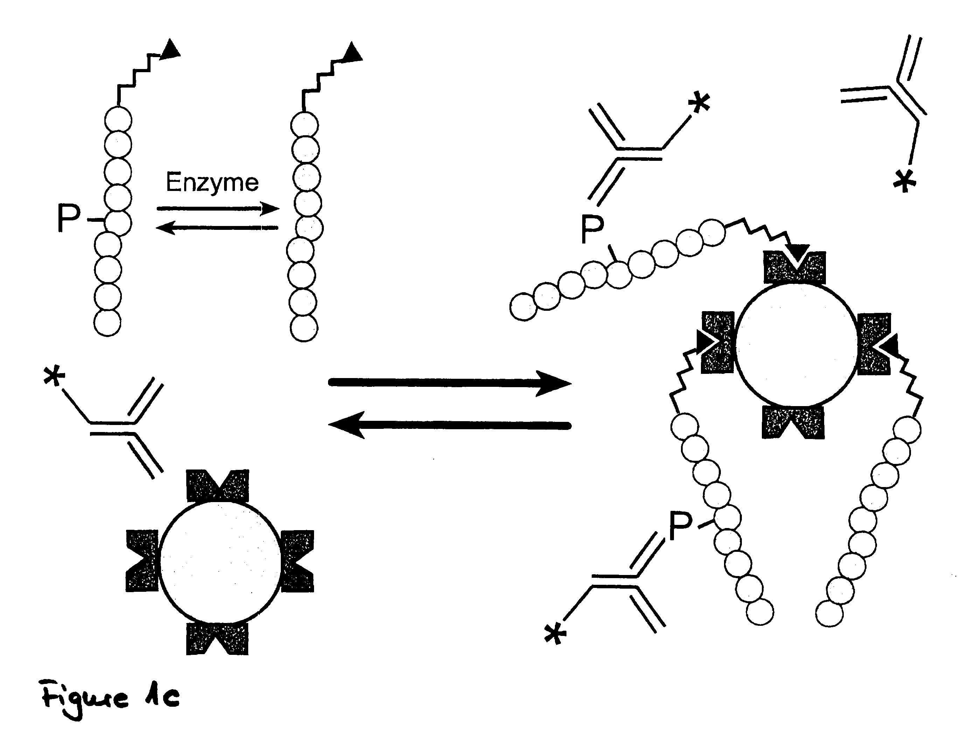

The principles of the present invention will now be considered relative to different homogeneous fluorescent binding assay methods, as illustrated in **Figure 1** a to e. Fig. 1a shows a competitive carrier particle immunoassay. Carrier particles are coated with an antibody. The coated carrier particles, the sample with the unknown amount of an analyte, and a know amount of fluorescently labelled antigen are placed in solution. The analyte and the antigen then compete for binding to the antibody. With increasing analyte concentration, the binding degree of the analyte conjugate decreases and, concurrently, the particle number per observation volume increases. Fig. 1b shows a "sandwich" carrier particle immunoassay. In this embodiment, carrier particles are coated with an antibody. A sample to be tested is added to the solution, and the analyte in the sample is bound to the antibody. A fluorescently labelled antibody is then added to the mixture and binds to the antigen. With increasing analyte concentration the binding degree of fluorescent detection antibody rises and the number of particles inside the focus decreases simultaneously. Fig. 1c shows an enzyme activity carrier particle binding assay. For clearness the example of a phosphatase assay is chosen. A phosphorylated (P) and biotinylated peptide is dephosphorylated by a phosphatase. Subsequently after the enzyme reaction, (i) streptavidin coated carrier particles and (ii) fluorescent anti-phosphotyrosine antibody which binds exclusively the phosphorylated peptide are added. At high enzyme activity no antibody molecule is bound to the carrier particles. If the enzyme activity is low or suppressed by an inhibitor, the antibodies bind to the carrier particles and thus the binding degree increases while the number of particles in the focus is declining. Fig. 1d shows a variant of the assay shown in Fig. 1c. A phosphorylated (P) and fluorescently labelled (TAMRA) peptide is dephosphorylated by a phosphatase. Subsequently after the enzyme reaction, antibody labelled carrier particles are added to which only the phosphorylated peptide is able to bind. At high enzyme activity no peptides are bound to the carrier particle. If the enzyme activity is low or suppressed by an inhibitor, the phosphorylated peptides bind to the carrier particles and thus the binding degree increases while the number of particles in the focus is declining. Fig. 1e shows an enzymatic cleavage assay. A substrate is fluorescently tagged at its one end, whereas the other end is biotinylated. Subsequently after the enzymatic cleavage reaction, streptavidin coated carrier particle are added. At high enzyme activity, many cleaved peptides will bind to the carrier particles via their biotin tag, whereas the low molecular mass fragment which is fluorescently tagged will be freely diffusing in solution.

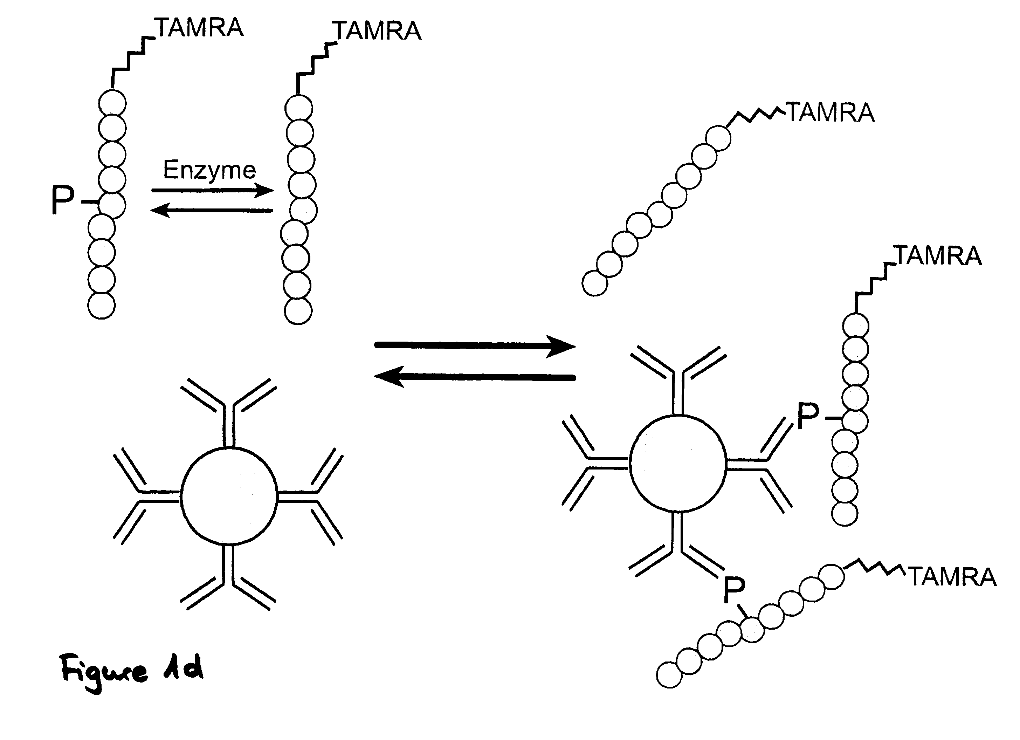

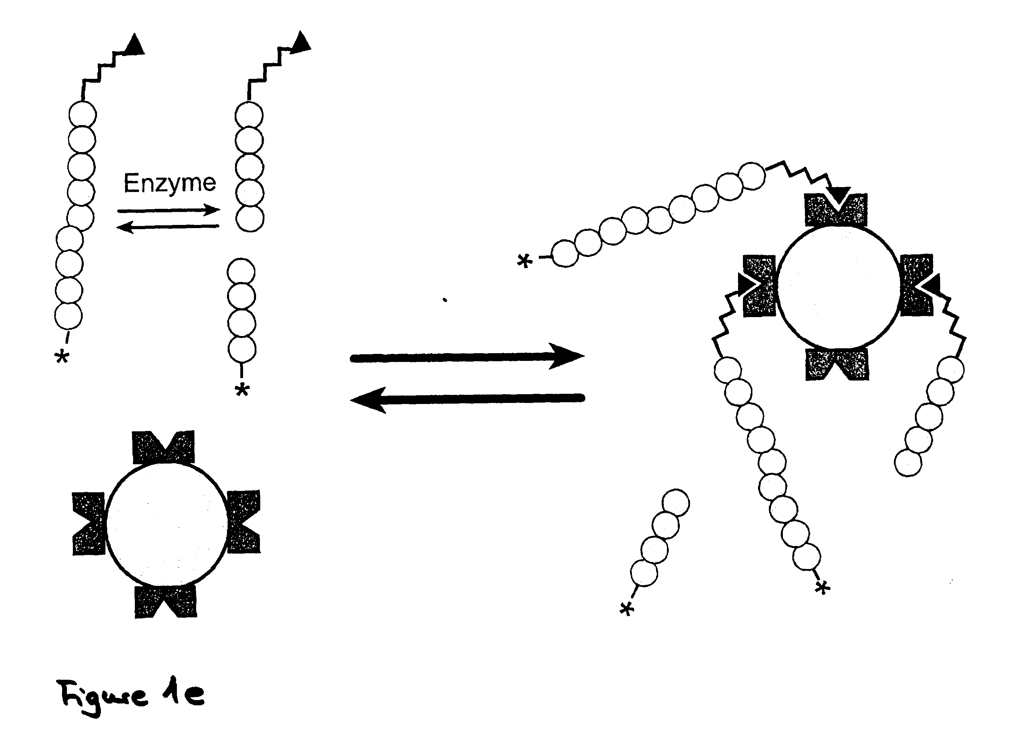

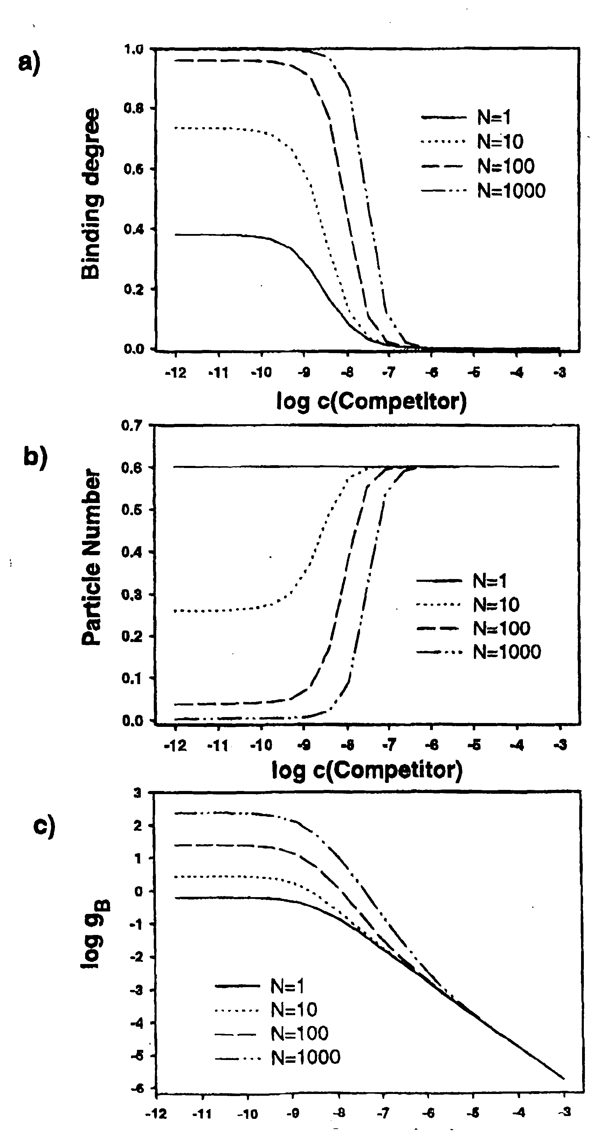

**Figure 2** shows simulated competition curves in respect of a) binding degree, b) mean particle number per observation volume, c) correlation amplitude $g_B$ of bound ligand which were generated using equations 1 and 8 with parameters $K_1 = K_2 = 1$ nM, $[L]_0 = [R]_0 = 1$ nM and different numbers N of receptor molecules per carrier particle.

This assay simulation was performed to determine which assay parameters are important for sensitivity in terms of $IC_{50}$. The $IC_{50}$ is defined as being the concentration of the unlabeled ligand C which inhibits 50 percent of the binding of the labelled ligand L to particles. The corresponding $IC_{50}$-values are summarised in table 1.

In all simulations of FCS correlation amplitudes, the concentration of labelled and unlabelled ligand in mol/l was multiplied by $6.023 \times 10^8$ in order to approximate the number of molecules occupying the FCS observation volume of $10^{-15}$ liter in an actual FCS measurement. The $K_1$ and $K_2$ values were fixed at 1 nM. The parameters $L_0$, $R_0$, $C_0$ and N were varied and are noted for each simulation.

The simulations show that the degree of binding measured using FCS will decrease with increasing competitor concentration. The higher the number of binding sites per carrier particle, the higher the degree of binding measured with FCS despite the fact that the ratio of free to bound ligand does not change (see fig. 2). This is due to differences in weighting the brightness of free ligand molecules and particles with several ligands bound to them in the FCS analysis algorithm. Put another way, this means that the degree of binding is overestimated if more than one fluorescent ligand is bound per particle. This means that the binding signal could be enhanced by using particles which carry many binding sites.

When the stoichiometry of ligand to binding sites is 1:1, the absolute number of particles per observation volume does not change upon binding. Using carrier particles which carry more than one binding site per particle, FCS enables the precise detection of the resulting decrease in the absolute number of particles per observation volume upon binding (see fig. 2, table 1). At the same time, the fluorescence emission per carrier particle increases. With increasing competitor concentration, the correlation amplitude of the bound ligand fraction, $g_B$, vanishes since it is the quotient of binding degree and particle number per observation volume. The greater the number of binding sites attached per particle, the greater the maximum value of the fractional correlation amplitude.

When only binding degree or the number of particles per observation volume are considered, assay sensitivity in terms of $IC_{50}$-values declines as the number of binding sites per carrier particle increases (see table 1). However, evaluation of the correlation amplitude for particle bound complexes $g_B$ should yield a sensitivity which is at least as high as that for simple binary binding (N=1).

Table 1:

| | | | Binding Degree | | Particle Number | | $g_B$ | $IC_{50}/nM$ |
|---|---|---|---|---|---|---|---|---|
| $[L]_0/nM$ | $[R]_0/nM$ | N | $\Delta_{max}$ | $IC_{50}/nM$ | $\Delta_{max}$ | $IC_{50}/nM$ | $\Delta_{max}$ | |
| 1 | 1 | 1 | 0.38 | 3 | 0 | - | 0.63 | 3 |
| | | 10 | 0.74 | 4 | 0.33 | 2.5 | 2.8 | 2 |
| | | 100 | 0.97 | 10 | 0.56 | 8 | 25 | 1.5 |
| | | 1000 | 0.99 | 35 | 0.6 | 30 | 250 | 1.5 |
| 1 | 10 | 1 | 0.90 | 20 | 0 | - | 1.5 | 20 |
| | | 10 | 0.95 | 30 | 0.25 | 20 | 2.8 | 20 |
| | | 100 | 0.99 | 50 | 0.53 | 40 | 15 | 15 |
| | | 1000 | 1.0 | 100 | 0.59 | 100 | 135 | 15 |
| 10 | 10 | 1 | 0.73 | 17 | 0 | - | 0.1 | 17 |
| | | 10 | 0.96 | 35 | 5 | 30 | 0.9 | 8 |
| | | 100 | 0.99 | 100 | 5.9 | 90 | 9 | 8 |

### Example 1: Theophylline-Assay

Theophylline is a drug used in the treatment of asthma and apnoea in premature infants (Uauy, R., Shapiro D.L., Smith, B. and Warshaw, J.B., Pediatrics 1975, 55:595-8). Its serum concentration must be closely monitored because even at the therapeutic dosage, some toxic effects can occur.

The TAMRA-theophylline was synthesized by EVOTEC BioSystems AG (Hamburg). Its chemical structure, half saturation point and $IC_{50}$ value for a complex between TAMRA-theophylline and the corresponding antibody is given in **Table 2**. The half-saturation point is defined as the dilution of antibody solution which binds half of the total theophylline conjugate. The competitor was unlabelled theophylline. The concentration of the conjugate was in the nanomolar range. The anti-theophylline antibody was purchased from Europa Research Products (Cambridge, UK). Theophylline was obtained from Sigma. Protein A coated carrier particles used in the experiments were from MicroCaps (Rostock). The carrier particles were Dextran-Ferrite-particles with a mean diameter of 80 nm and a CV $\leq$ 20 %. The number of binding sites per carrier particle was between 1 and 3.

The concentrations of the conjugate TAMRA-theophylline, the corresponding antibody and the carrier particles were kept constant in a specific series of experiments. The competitor (theophylline) concentration varied from 0.1 to 5000 nM. All incubations and measurements were carried out at room temperature (22 $\pm$ 2 °C). The competitive assay was carried out as follows: The TAMRA-theophylline conjugate was mixed with the corresponding unlabelled molecules. The mixture was then incubated with the corresponding unlabelled antibody at a final dilution of 1:10,000 at 37 °C for 15 minutes. In the final step, a colloid suspension of carrier particles in PBS assay buffer (140 mM NaCl, 3 mM KCl, 8 mM $Na_2HPO_4$, 1.5 mM $KH_2PO_4$, pH 7.4, 0.05% Tween 20) was added and the whole mixture was incubated at 37 °C for an additional 15 minutes. It was shown independently that antibody and Protein A coated carrier particles could be premixed yielding similar results.

The optical set up was as follows: ConfoCor® (Carl Zeiss, Jena/EVOTEC BioSystems AG, Hamburg) equipped with a standard filter set for excitation with a helium-neon laser (543 nm line, 40 μW, Uniphase), C-APOCHRO-MAT 40x/1.2 objective (Carl Zeiss Jena), pinhole 50 μm. The photon count signal was auto-correlated over 20 seconds.

Evaluation of the auto-correlation curves was carried out with a Marquardt nonlinear least-square fitting routine using the following two-component model corresponding to free and bound conjugate:

$$G(\tau) = \left[1 - T + T\exp\left(\frac{-\tau}{\tau_T}\right)\right] N^{-1} \left[\frac{1 - Y}{\left(1 + \frac{\tau}{\tau_{free}}\right)\sqrt{1 + \frac{r_0^2}{z_0^2}\frac{\tau}{\tau_{free}}}} + \frac{Y}{\left(1 + \frac{\tau}{\tau_{bound}}\right)\sqrt{1 + \frac{r_0^2}{z_0^2}\frac{\tau}{\tau_{bound}}}}\right] \qquad (9)$$

where T is the average fraction of dye molecules in the triplet state with relaxation time $\tau$; N is the total average number of fluorescent molecules in the observation volume; Y is the relative concentration fraction of bound conjugate; $\tau_{free}$ and $\tau_{bound}$ define the average time (diffusion time) detected for free and bound conjugate molecules, respectively: $r_0$ and $z_0$ are the lateral and axial distances between the coordinate where the Gaussian emission light distribution reaches its maximum value and the point where the light intensity decreases to $1/e^2$ of the maximum value (observation volume).

The Feldman equations, which describe the competition of conjugate and corresponding unlabeled molecules for binding to a common receptor molecule, were solved numerically using MathCad and Scientist. The experimental competition curves were fit to equations 1 and 8, with the parameters $K_1$, $K_2$, which are the $K_D$-values for the conjugate and the competitor, respectively, number of receptor molecules per carrier particle, N, and the concentration of carrier particles, $[P]_0$, and conjugate, $[L]_0$, using the Levenberg-Marquardt fitting routine implemented in the program Scientist.

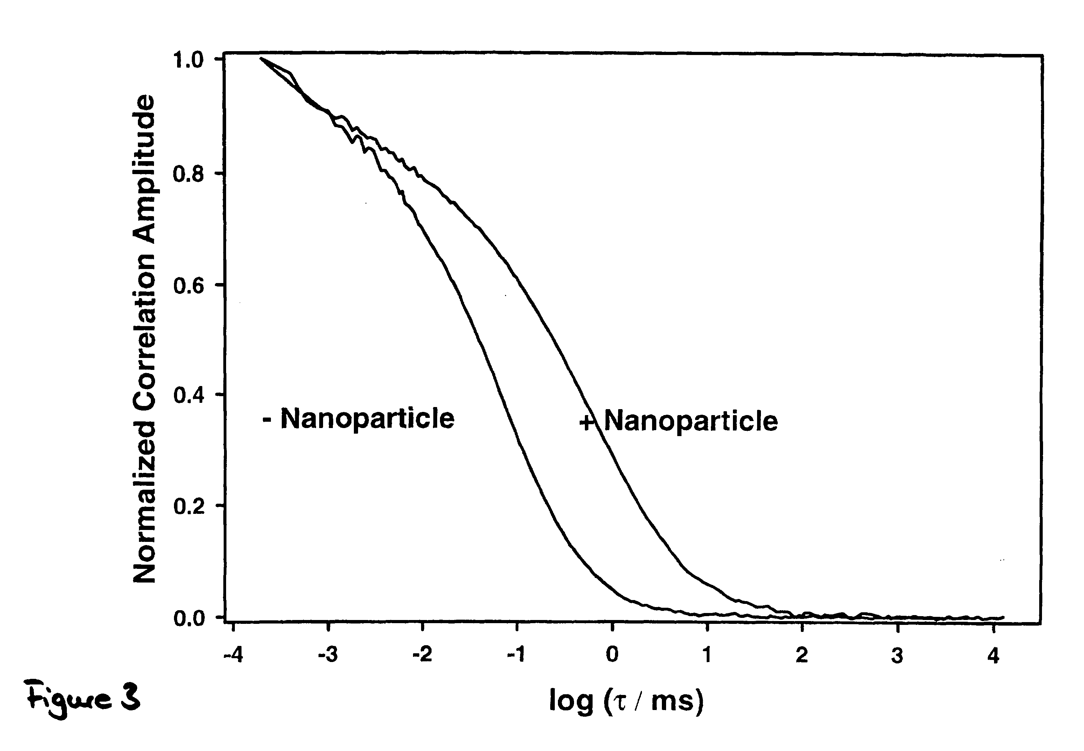

**Figure 3** shows normalized autocorrelation curves of the fluorescence emission of TAMRA-theophylline and its complex with anti-theophylline antibody and carrier particles coated with protein A. The carrier particles varied only slightly from one another in size with a mean diameter of about 90 nm. The small diameter as well as the narrow size distribution account for the high reproducibility of the FCS results.

The diffusion times for (i) unbound TAMRA-theophylline and (ii) the complex consisting of TAMRA-theophylline, anti-theophylline antibody and carrier particles coated with protein A were 70 and 860 $\mu$s, respectively. The amount of TAMRA-theophylline used resulted in 3.4 particles per observation volume, corresponding to a concentration of 22.6 nM given a focus size of $0.25 \times 10^{-15}$ liter.

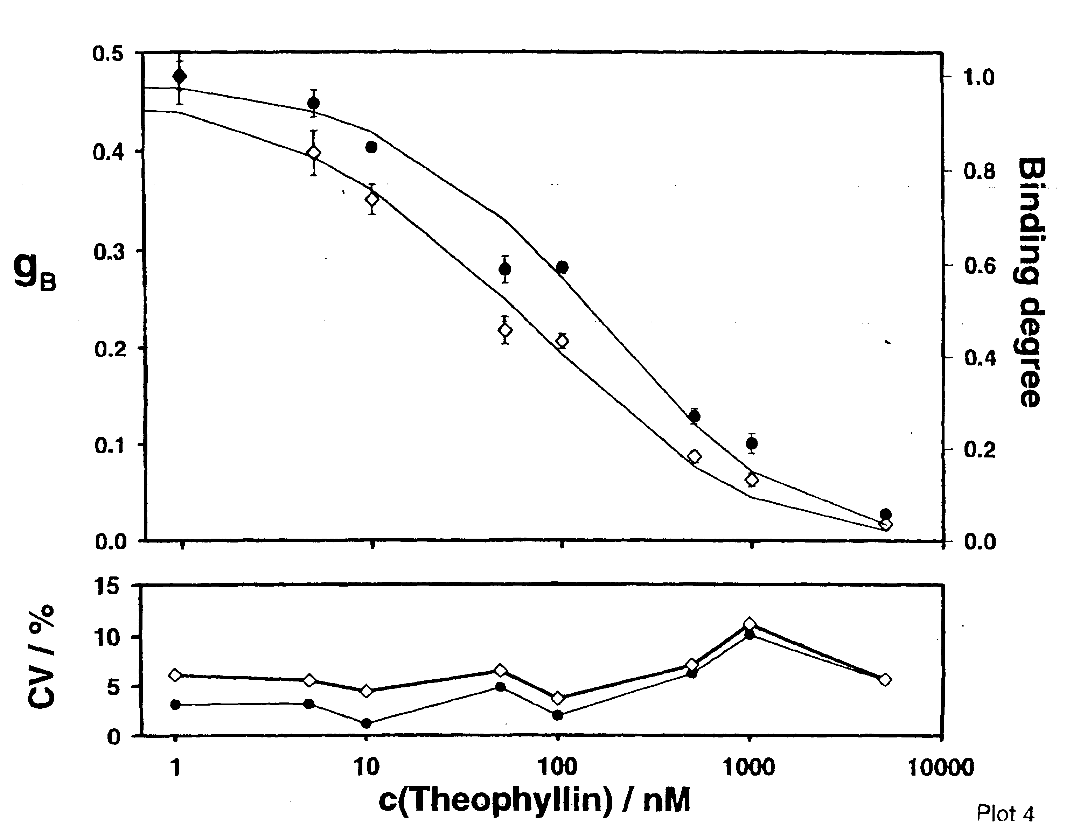

In the top panel of **Figure 4,** the correlation amplitude $g_B$ ($\Diamond$) and the degree of binding ($\bullet$) of TAMRA-theophylline bound to carrier particles ($\varnothing = 80$ nm) are plotted versus concentration of competing unlabelled theophylline. The solid lines are a simultaneous fit of both data sets to equations 1 and 8 yielding the parameters: $K_1 = 3.1 \times 10^{-13}$ M, $K_2 = 2.5 \times 10^{-12}$ M, $[P]_0 = 14$ nM, N = 1.57 and $[L]_0 = 22.6$ nM. In the bottom panel of Fig. 4, the CV-values of the corresponding data points in the top panel are plotted.

The $IC_{50}$ value calculated from a plot of binding degree, Y, versus theophylline concentration was about 140 nM. When the correlation amplitude, $g_B$, of the TAMRA-theophylline complex was plotted against theophylline concentration, the $IC_{50}$-value is shifted slightly lower towards concentrations of approximately 65 nM.

The mean number of anti-theophylline antibodies immobilised onto the surface of a carrier particle was calculated to be 1.57. This number is rather small, but agrees with the small change in particle number from 3.4 to 2.1 measured in presence of 1000 and 1 nM theophylline, respectively. The calculated concentration of carrier particles is 14.2 nM and the $K_D$ values for TAMRA-theophylline and the competitor theophylline are $3 \times 10^{-13}$ and $2.5 \times 10^{-12}$ M, respectively.

These binding affinities appear to be somewhat high compared with typical antigen-antibody $K_D$ values of $10^{-12}$ to $10^{-9}$ M. The fit is strongly dependent on the parameters conjugate concentration $[L]_0$, number of receptors per particle N and particle concentration $[P]_0$. For example, if the $K_1$ value is fixed at $10^{-11}$ M, the resulting fit is of similar quality to that made by varying $K_1$, and the resulting $K_2$ is $8.3 \times 10^{-11}$ M. The parameters $[P]_0$ and N did not change significantly compared to the fit made with variable $K_1$, and were calculated to be 14.1 nM and 1.59, respectively. Taken together, the data agreed with the proposed model and the prediction of greater assay sensitivity when using the correlation amplitude $g_B$ could be proven.

### Example 2: 17-β-Estradiol-Assay

Accurate measurement of the circulating levels of estradiol is important for assessing ovarian function and monitoring follicular development for assisted reproduction protocols. Estradiol plays an essential role throughout the human menstrual cycle (Speroff L. Glass RH, Kase NG (editors), Clinical Gynecologic Endocrinology and Infertility, 4th edition, Baltimore: Williams and Wilkins, 1989:91-119).

The 17-β-estradiol conjugate was synthesized by EVOTEC BioSystems AG (Hamburg). The anti-estradiol-antibody was kindly provided by Dr. Schumacher (Institute of Fertility Research, Hamburg). 17-β-estradiol was obtained from Sigma. The protein A coated carrier particles (Protein A Ferrofluid™) with a mean diameter of 160 nm were from Immunicon. The optical set-up was the same as described in Example 1. The photon count signal was auto-correlated over 60 seconds. Data evaluation and fitting procedures were the same as described in Example 1.

The concentration of the conjugate (TAMRA-estradiol), the corresponding antibody and the carrier particles were kept constant in a specific series of experiments. The competitor (17-β-estradiol) concentration varied from 0.1 to 5000 nM. All incubations and measurements were carried out at room temperature ($22 \pm 2$ °C). The competitive assays were carried out as follows: The TAMRA conjugate of estradiol was mixed with the corresponding unlabelled molecules. The mixture was then incubated with the corresponding unlabelled antibody at a final dilution of 1:10,000 at 37 °C for 15 minutes. In the final step, a colloid suspension of carrier particles in PBS assay buffer (140 mM NaCl, 3 mM KCl, 8 mM $Na_2HPO_4$, 1.5 mM $KH_2PO_4$, pH 7.4, 0.05% Tween 20) was added and the whole mixture was incubated at 37 °C for an additional 15 minutes. Some experiments with JA190-estradiol conjugates were carried out in E-NAP buffer (200 mM sodium acetate, 150 mM NaCl, 0.2 % BSA, pH 4). It was shown independently that antibody and Protein A coated carrier particles could be premixed yielding similar results.

Since it is suspected that coupling a fluorophore to a molecule as small as estradiol could have an impact on its binding specificity and affinity to its antibody, a set of fluorescent estradiol conjugates were synthesized and studied. The results are summarized in **Table 2**. All estradiol conjugates, except for the BODIPY™ - derivative, bound to an anti-estradiol antibody with similar affinity. Binding of the BODIPY™ derivative could not be evaluated because of the occurence of severe aggregation, most probably due to the hydrophobicity of the dye. Of the remaining conjugates, only Cy5-estradiol exhibited a significant decrease in affinity for the anti-estradiol antibody. All other conjugate-antibody interactions remained strong. The $IC_{50}$ values for the bound conjugates were in the nanomolar range, except for the Cy5 conjugate, which had an $IC_{50}$ of > 20 μM due to the low affinity of the anti-estradiol antibody to the Cy5 conjugate. TAMRA-estradiol was used for further assay evaluation.

In contrast to the theophylline assay described in experiment 1, protein A-coated carrier particles with a mean diameter of 160 nm and a relative broad distribution of diameter were used. This resulted in markedly worse FCS results even though measurement time was extended to 60 seconds instead of 20 seconds. On the other hand, the antibody binding capacity of the carrier particles used in experiment 2 was much higher than the antibody binding capacity of the carrier particles used in experiment 1.

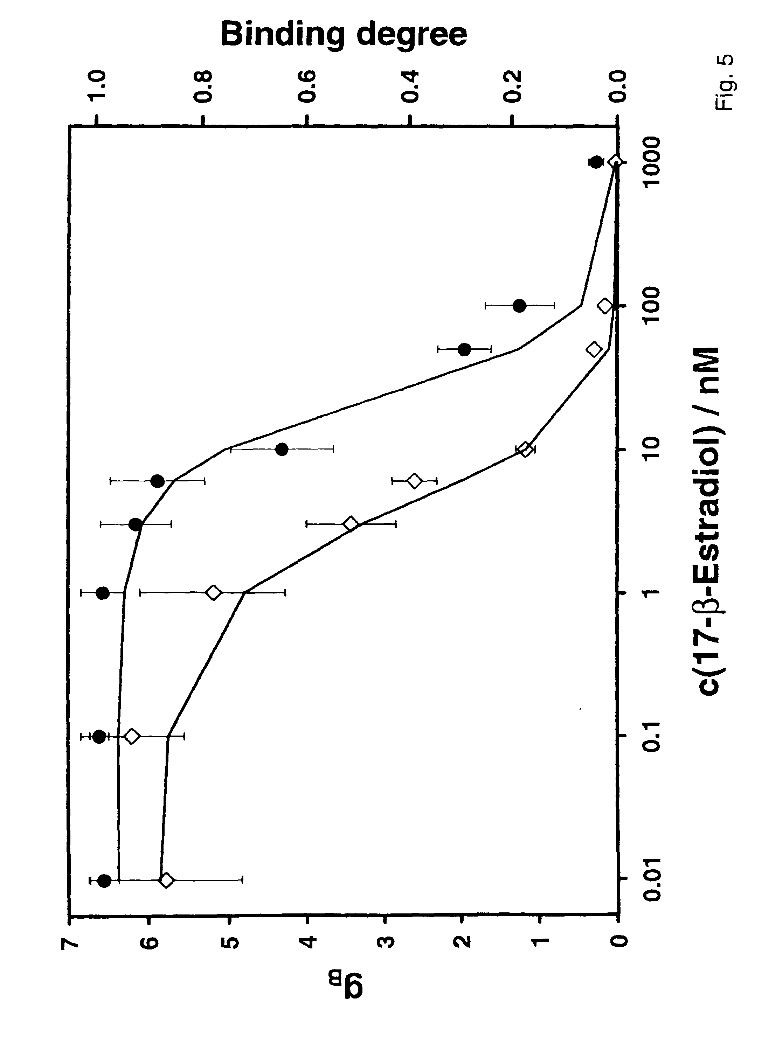

Theoretically, the change in particle number should be more pronounced the greater the number of antibodies per carrier particle. Furthermore, it is expected that the assay will become much more sensitive when gB is used as the read-out parameter instead of the degree of binding. The mean particle number per FCS observation volume decreases from 1.7 to 0.17 upon 100 % binding. The $IC_{50}$ values obtained when using the correlation amplitude and the binding degree are 3 and 20 nM, respectively. **Figure 5** shows a plot of correlation amplitude $g_B$ (◊) and binding degree (•) of TAMRA-estradiol bound to carrier particles ($\varnothing$ = 160 nm) versus concentration of competing unlabelled estradiol. The solid lines are a simultaneous fit of both data sets to equations 1 and 8 yielding the parameters: $K_1 = 1.4 \times 10^{-12}$ M, $K_2 = 5.9 \times 10^{-13}$ M, $[P]_0 = 0.17$ nM, N = 34 and $[L]_0 = 15$ nM. The difference in the $IC_{50}$ values obtained from competition experiments when using correlation amplitude, $g_B$, versus the binding degree is greater than with the theophylline assay. This is in agreement with the model predicting this difference to be greater the more binding sites presented per carrier particle.

### Example 3: Human chorionic gonadotropin assay

Human chorionic gonadotropin (hCG) is a glycoprotein with two non-covalently bound subunits. The α-subunit is similar to those of luteinizing hormone (LH), follicle-stimulating hormone (FSH), and thyroid-stimulating hormone (TSH) (Russel PT "Pregnancy and fetal function". In: Kaplan LA, Pesce AJ, Clinical Chemistry: theory, analysis and correlation. St. Louis, CV Mosby, 572, 1989; Kaplan et al. "Human chorionic gonadotropin". In: see above, 938 - 944). The β-subunit of hCG differs from other pituitary glycoprotein hormones, which results in ist unique biochemical and immunological properties. HCG is synthesised by the cells of the placenta and is involved in maintaining the corpus luteum during pregnancy. It is detected as early as one week after conception. In pregnancy, the levels of hCG increase exponentially for about 8 to 10 weeks after the last menstrual cycle. Later in pregnancy, about 12 weeks after conception, the concentration of hCG begins to fall as the placenta begins to produce steroid hormones. Other sources of elevated hCG values ectopic pregnancy, threatened abortion, micro-abortion and recent termination of pregnancy, or chorionic-, embryonal- or terato-carcinoma.

Monoclonal mouse anti-α-hCG antibody (Biotrend) was coupled to Alexa-586™ according to manufacturers protocol (Molecular Probes). From the ratio of absorption at 280 nm and 577 nm a dye loading of 4.7 Alexa molecules per protein was estimated. Another monoclonal mouse anti-β-hCG antibody (Chemicon) was biotinylated using biotin-LC-sulfo-NHS-ester (Pierce) according to standard protocols. As analyte highly purified hCG (Chemicon) was used. The assay protocol was as follows: Incubation of Alexa-568™ coupled anti-α-hCG antibody and hCG at 37 °C for 15 minutes. Subsequently, biotinylated anti-β-hCG antibody and carrier particles (Streptavidin MicroBeads™, Miltenyi Biotech) with a mean diameter of 100 nm were added after incubating each step for 15 minutes, respectively. This protocol can be simplified by premixing Alexa-586™-anti-α-hCG, biotinylated anti-β-hCG antibodies and carrier particles for 15 minutes at 37 °C and adding unknown analyte to the mixture. The ternary binding reaction was determined to be completed after less than 5 minutes (data not shown).

The optical set-up was the same as described in Example 1. The photon count signal was auto-correlated over 5 minutes. Data evaluation and fitting procedures were the same as described in Example 1.

HCG is a large molecule and thus allows for the setup of a carrier particle immuno sandwich assay. In the assay, a pair of monoclonal mouse antibodies were used: one directed against the α-subunit, the other against the β-subunit of hCG. Since the α-subunit of hCG is similar to those of LH, FSH and TSH, this sandwich assay can be easily extended to these analytes by simply exchanging the anti-β-hCG-antibody. For the hCG-sandwich-assay streptavidin-coated carrier particles with a very broad size distribution were used. In contrast to competition experiments, the binding degree of carrier particle bound complexes rised with increasing hCG concentration because the detection antibody (Alexa-anti-β-hCG) is bound to the carrier particles via hCG antigen (see Fig. 1b). Above a threshold where all carrier particles are saturated by hCG, increasing hCG concentrations capture detection antibodies thus decreasing the percentage of carrier particle bound complexes. In a diagnostic hormone assay, this case should be prevented by raising the binding capacity of the carrier particles. The transition range of the degree of binding determined by FCS is shifted to lower hCG concentrations with respect to the transition range of the autocorrelation amplitude of the carrier particle bound complex, the more binding sites are immobilised per carrier particle. Consequently, it is possible to extend the dynamic range of a sandwich carrier based assay compared to conventional sandwich immuno assays by an overlay of the FCS binding degree and autocorrelation amplitude data.

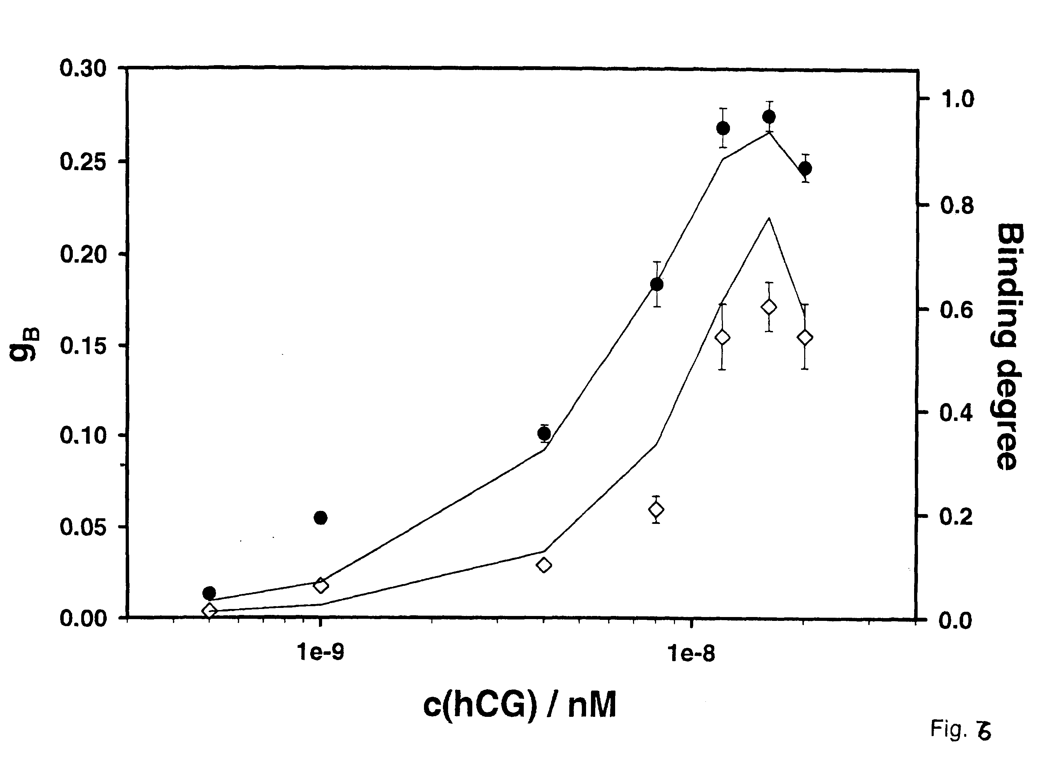

**Figure 6** shows the correlation amplitude $g_B$ (◊) and degree of binding (*) of a sandwich assay consisting of Alexa-586™ labelled anti-α-hCG antibody and anti-β-hCG bearing carrier particles in the presence of different hCG concentrations. The determined parameters are: $K_\alpha = 3.4 \times 10^{-11}$ M, $K_\beta = 4.1 \times 10^{-12}$ M, $[P_0] = 5.4$ nM, N = 2.6 and $[L_0] = 16$ nM. $K_\alpha$ is defined as $K_D$ between Alexa-586™ labelled anti-α-hCG antibody and hCG under the assumption that $K_D$ is not substantially influenced by binding of hCG to anti-β-hCG bearing carrier particles. $K_\beta$ is defined as $K_D$ between anti-β-hCG (which is attached to the carrier particles) and hCG under the assumption that $K_D$ is not substantially influenced by binding of hCG to anti-α-hCG antibody.

Table 2:

| Conjugate | Chemical Structure | Half saturation point / antibody dilution | $IC_{50}$ [7] / nM |
|---|---|---|---|
| TAMRA-diaminodioxaoctan-estradiol | | < 1:20000 [1,3] | 20 [3,5] |
| Cy5-diaminodioxa-octan-**estradiol** | | ca. 1:60 [1,4] | > 20000 [4,5] |
| Resorufin-diamino-dioxaoctan-**estradiol** | | 1:3500 [1,3] | 10 [3,5] |
| BODIPY630-diaminodioxaoctan-**estradiol** | | no binding [1,3] | n.d. aggregation |
| JA190-diaminodioxa-octan-**estradiol** | | 1:10000 [1,4] | 1 [4,5] |
| JA190-diaminoethan-**estradiol** | | 1:10000 [1,4] | 1 [4,5] |
| JA190-(diaminodioxa-octan)$_2$-**estradiol** | | 1:10000 [1,4] | 2 [4,6] |
| TAMRA-**theophyllin** | | 1:50000 [2,3] | 100 [3,6] |

| | |
|---|---|
| [1] anti-estradiol antibody | [5] Competitor 17-β-estradiol |
| [2] anti-theophyllin antibody | [6] Competitor theophylline |
| [3] PBS-buffer | [7] on the basis of binding degree as determined using FCS |
| [4] E-NAP-buffer | |

**Claims**

1. A homogeneous fluorescent binding assay method comprising the steps of:

   - providing carrier particles in solution with at least one binding site on each of said carrier particles;
   - providing at least first and second components; with the first being a substance to be tested, the second being tagged with a fluorescent substance;
   - exposing said carrier particles to the first and second components, to cause a reaction between said first and/or second components and said at least one binding site on said particles; whereby the number of fluorescently tagged components to said carrier particles changes;
   - illuminating the solution containing both the free and bound fluorescently tagged substances with optical radiation at a first wavelength to cause fluorescent output radiation at a second longer wavelength;
   - optically sensing output signals at said second wavelength resulting from said fluorescent output radiation;
   - electronically processing the optically sensed signals to determine the amount of fluorescently tagged component which is free and/or that which is bound to the carrier particles without physically separating the free and bound fluorescent components;
   - wherein complexes between said fluorescently tagged components and said carrier particles are freely diffusing within said solution.

2. A binding assay method according to claim 1 comprising further components tagged with a fluorescent substance which differs from that tagged to said second component.

3. A binding assay method according to claim 1 and/or 2 further comprising quencher molecules.

4. A binding assay method according to any of claims 1 to 3, wherein said carrier particles comprise metal oxides, metal hydroxides, silicates, metal colloids, silver halogenites, arsenic sulfide, nickel sulfide, cobalt sulfide, carbon colloids, and/or organic polymers.

5. A binding assay method according to claim 1 and/or 2 wherein said carrier particles have a diameter $d \leq$ approximately 1 μm.

6. A binding assay method according to claim 3, wherein said carrier particles have a diameter d in the range 1 nm $\leq d \leq$ 1 μm, preferably in the range 10 nm $\leq d \leq$ 500 nm, more preferably in the range 50 nm $\leq d \leq$ 300 nm.

7. A binding assay method according to any of claims 1 to 4 wherein said carrier particles are substantially monodisperse.

8. A binding assay method according to any of claims 1 to 5, wherein said carrier particles , having a coefficient of variation (CV) of diameter which is $\leq$ 20 %, preferably $\leq$ 10 %, more preferably $\leq$ 5 %.

9. A binding assay method according to any of claims 1 to 6, wherein said carrier particles exhibit only such a limited amount of binding sites that no quenching effects between neighboured fluorophores occurs.

10. A binding assay method according to any of claims 1 to 7, wherein illuminating the solution is performed on basis of a confocal optical set-up and/or multi-photon excitation and/or a near-field optical set-up.

11. A binding assay method according to any of claims 1 to 8, wherein optically sensing output signals is performed by measuring in a repetitive mode a number of photon counts per time interval of defined length.

12. A binding assay method according to any of claims 1 to 8, wherein optically sensing output signals is performed by measuring in a repetitive mode a length of time intervals between preferably consecutive photon counts.

13. A binding assay method according to claim 9, wherein electronically processing the optically sensed output signals comprises the steps of determining a distribution function of the number of photon counts per said time interval and thereafter determining a distribution function of specific brightness of said carrier particles and/or said fluorescently tagged components on basis of said function of the number of photon counts.

14. A binding assay method according to claim 10, wherein electronically processing the optically sensed output signals comprises the steps of determining a distribution function of the length of said time intervals and thereafter determining a distribution function of specific brightness of said carrier particles and/or said fluorescently tagged components on basis of said function of the length of time intervals.

15. A binding assay method according to claim 11 and/or 12, wherein electronically processing the optically sensed output signals is performed by applying an inverse transformation with linear regularisation and/or constraints.

16. A binding assay method according to any of claims 1 to 13 for use in high throughput pharma screening, therapeutic monitoring and diagnostics.

Fluorescence label

Antibody carrying nanoparticle

Analyte

Figur 1a

Figure 16

Figure 1c

Figure 1d

Figure 1e

Figure 3

Plot 4

Fig. 5

EP 1 033 567 A1

Fig. 6

## EUROPEAN SEARCH REPORT

**European Patent Office**

**Application Number**

EP 99 10 4273

### DOCUMENTS CONSIDERED TO BE RELEVANT

| Category | Citation of document with indication, where appropriate, of relevant passages | Relevant to claim | CLASSIFICATION OF THE APPLICATION |
|---|---|---|---|
| X | EP 0 099 266 A (SYVA)<br>25 January 1984 (1984-01-25)<br>* page 1, last paragraph *<br>* page 2, line 24 - page 3, line 21 *<br>* page 8, line 8 - line 13 *<br>* page 8, line 31 - line 34 *<br>* page 10, line 5 - line 22 *<br>* page 11, line 18 - line 27 *<br>* page 12, line 16 - line 18 *<br>* page 13, line 1 - line 26; figure *<br>--- | 1,3-6,11 | G01N21/64 |
| D,A | US 4 421 860 A (ELINGS)<br>20 December 1983 (1983-12-20)<br>* column 2, line 32 - line 61 *<br>* column 11, line 13 - line 18 *<br>--- | 1 | |
| A | EP 0 697 590 A (BASF)<br>21 February 1996 (1996-02-21)<br>* column 1, paragraph 1 - paragraph 3 *<br>* column 7, paragraph 1 *<br>--- | 1 | |
| A | K.M. BERLAND ET AL: "Two-photon fluorescence correlation spectroscopy: method and application to the intracellular environment"<br>BIOPHYSICAL JOURNAL,<br>vol. 68, February 1995 (1995-02), pages 694-701, XP000195638<br>* page 695, left-hand column, line 17 - last last * | 1,10 | **TECHNICAL FIELDS SEARCHED**<br><br>G01N |

The present search report has been drawn up for all claims

| Place of search | Date of completion of the search | Examiner |
|---|---|---|
| THE HAGUE | 10 August 1999 | Thomas, R.M. |

EPO FORM 1503 03.82 (P04C01)

**EP 1 033 567 A1**

| Patent document cited in search report | | Publication date | Patent family member(s) | | Publication date |
|---|---|---|---|---|---|
| EP 0099266 | A | 25-01-1984 | US | 4564598 A | 14-01-1986 |
| | | | AT | 30268 T | 15-10-1987 |
| | | | AU | 573176 B | 02-06-1988 |
| | | | AU | 1672483 A | 19-01-1984 |
| | | | CA | 1215182 A | 09-12-1986 |
| | | | DE | 3374079 A | 19-11-1987 |
| | | | JP | 1883606 C | 10-11-1994 |
| | | | JP | 6008821 B | 02-02-1994 |
| | | | JP | 59081559 A | 11-05-1984 |
| | | | US | 4739171 A | 19-04-1988 |
| US 4421860 | A | 20-12-1983 | US | 4407964 A | 04-10-1983 |
| EP 0697590 | A | 21-02-1996 | DE | 4429239 A | 22-02-1996 |
| | | | JP | 8068694 A | 12-03-1996 |

EPO FORM P0459